Europäisches Patentamt

**European Patent Office**

Office européen des brevets

(11) Veröffentlichungsnummer : **0 090 402**
**B1**

(12) **EUROPÄISCHE PATENTSCHRIFT**

(45) Veröffentlichungstag der Patentschrift :
**12.02.86**

(21) Anmeldenummer : **83103076.2**

(22) Anmeldetag : **28.03.83**

(51) Int. Cl.⁴ : **H 04 B   3/44**, H 04 B 17/02

(54) Schaltungsanordnung zum selbsttätigen Schliessen einer ersatzweisen Fernspeiseschleife.

(30) Priorität : **29.03.82 DE 3211497**

(43) Veröffentlichungstag der Anmeldung :
**05.10.83 Patentblatt 83/40**

(45) Bekanntmachung des Hinweises auf die Patenterteilung : **12.02.86 Patentblatt 86/07**

(84) Benannte Vertragsstaaten :
**AT BE CH DE FR GB IT LI LU NL SE**

(56) Entgegenhaltungen :
**DE-A- 3 028 954**
**DE-B- 1 267 267**
**GB-A- 2 063 029**
**SIEMENS ZEITSCHRIFT, Band 48, 1974, Seiten 109-111, Beiheft "Nachrichten-Übertragungstechnik", Erlagen, DE., E. BRAUN et al.: "Fehlerortung in TF-Kabelstrecken mit Unterflurverstärkern"**

(73) Patentinhaber : **Siemens Aktiengesellschaft Berlin und München Wittelsbacherplatz 2 D-8000 München 2 (DE)**

(72) Erfinder : **Kraicar, Heinz, Dipl.-Ing. Lindenberg 60A D-8134 Pöcking (DE)**
Erfinder : **Ziegler, Alfred, Dipl.-Ing. Laimer Platz 1 D-8000 München 21 (DE)**

## Beschreibung

Die Erfindung bezieht sich auf eine Schaltungsanordnung zum selbsttätigen Schließen einer unterbrochenen Fernspeiseschleife vor der Unterbrechungsstelle in der betriebsmäßig vorgesehenen Fernspeiseschleife einer Fernspeiseeinrichtung, die elektrische Verbraucher mittels Gleichstrom-Reihenspeisung speist, wobei in einem Längszweig eine Haltewicklung eines Schaltrelais und eine bei nicht erregtem Schaltrelais wirksam und bei Erregung des Schaltrelais unwirksam schaltbare Ansprechwicklung und in einem Querzweig eine einen Ruhekontakt des Schaltrelais, eine Drossel und einen Widerstand enthaltende Serienschaltung angeordnet ist und das Relais durch den in der betriebsmäßig vorgesehenen Fernspeiseschleife fließenden Strom bei einem vorgegebenen Bruchteil vom Nennwert des Fernspeisestromes erregt wird und bei darauffolgendem Absinken des Fernspeisestromes unter einen vorgegebenen Wert abfällt, insbesondere mit einer RC-Serienschaltung parallel zum Ruhekontakt.

Eine derartige Schaltungsanordnung ist bereits aus der Siemens-Zeitschrift 48 (1974) Beiheft « Nachrichten-Übertragungstechnik », Seite 111, Bild 5 bekannt.

Die fernstromversorgten Zwischenregeneratorstellen bzw. -verstärkerstellen eines Nachrichten-Weitverkehrssystems können sogenannte Schaltzusätze enthalten, welche die Aufgabe haben, im Falle einer Streckenunterbrechung den Fernspeisekreis vor dem fehlerhaften Verstärkerfeld wieder zu schließen. Die Fehlerortung kann dann über ein systemeigenes Ortungsverfahren erfolgen.

Aus der genannten Veröffentlichung ist es bekannt, zu diesem Zweck in den Schaltzusätzen Schaltrelais mit einem Ruhekontakt einzusetzen, deren Spule im Normalbetrieb vom Fernspeisestrom durchflossen ist und den Kontakt offen hält. Im Falle einer Streckenunterbrechung schließt der Kontakt und verbindet beide Fernspeisestrompfade miteinander. Der Kontakt ist als Umschaltekontakt ausgebildet, dessen Ruheseite die Querverbindung schaltet und dessen Arbeitsseite nach dem Ansprechen des Schaltrelais einen als Ansprechwicklung dienenden Teil der Erregerwicklung des Schaltrelais kurzschließt, so daß dann nur noch ein als Haltewicklung dienender Teil wirksam ist.

Bei einem derartigen Schaltzusatz sollte der Haltespannungsabfall an der Relaisspule wesentlich geringer sein als die Betriebsspannung des Regenerators bzw. Verstärkers ; dies erfordert in der Praxis Ansprechleistungen von z. B. weniger als 100 mW.

Zwischen den geöffneten Kontakten kann die hohe Fernspeisespannung von z. B. 1 200 V dauernd anliegen. Beim Schliessen müssen sich die auf diese Spannung aufgeladenen Streckenkapazitäten, insbesondere in der Größe von mehreren Microfarad über ihn entladen können. Andererseits muß er auch bei niedrigen Spannungen von z. B. weniger als 20 V auch nach jahrelanger Nichtbetätigung sicher schliessen.

Schließlich ist es von wesentlichem Vorteil, wenn das Relais und die zugehörige Schutzbeschaltung auf geringem Raum untergebracht werden können.

Aufgabe der Erfindung ist es, eine Schaltungsanordnung der eingangs genannten Art derart auszubilden, daß sich ein möglichst geringer Spannungsabfall an der Haltewicklung ergibt und daß die Schaltungsanordnung bei großer Verfügbarkeit auf möglichst kleinem Raum untergebracht werden kann.

Ein geringer Spannungsabfall an der Haltewicklung und eine große Verfügbarkeit erfordern bei bekannten Schaltzusätzen Relais, die Kontakte mit relativ hoher Schaltleistung und einen ausreichend großen Wickelraum für die Erregerwicklung besitzen. Sowohl die hierdurch festgelegte Typengröße des Schaltrelais als auch eine zum Schutz des Kontaktes notwendige Drossel bestimmen dann die Abmessungen des für den Schaltzusatz im Verstärker- bzw. Regeneratorgehäuse erforderlichen Raumes. Die gewünschte Unterbringung auf möglichst kleinem Raum läßt sich daher nicht ohne weiteres gleichzeitig mit den elektrischen Anforderungen erfüllen.

Gemäß der Erfindung wird die gestellte Aufgabe dadurch gelöst, daß die Ansprechwicklung des Schaltrelais mittels eines ersten, über eine erste Verzögerungsschaltung an den Widerstand angeschlossenen Hilfsrelais wirksam schaltbar ist und daß in Serie zur Ansprechwicklung des Schaltrelais ein Arbeitskontakt des ersten Hilfsrelais angeordnet ist und daß die Serienschaltung aus dem Arbeitskontakt und der Ansprechwicklung durch eine für den Fernspeisestrom in Durchlaßrichtung gepolte Diode überbrückt ist. Zweckmäßigerweise werden im Hinblick auf den gewünschten geringen Platzbedarf die Hilfsrelais als Relais mit Dual-in-line-Gehäuse ausgebildet.

Durch diese Maßnahmen ergibt sich der Vorteil, daß sämtliche Kontakte als dauernd geöffnete Einfachkontakte ausgeführt sind. Der mit dem Hilfsrelais und der Verzögerungsschaltung verbundene zusätzliche Bauteileaufwand hat in vorteilhafter Weise auf die Ausfallrate des Schaltzusatzes praktisch keinen Einfluß, da während des ungestörten Betriebes der Übertragungsstrecke alle diese Bauteile strom- und spannungslos sind.

Sollen sowohl ein möglichst kleines Relais als auch eine möglichst kleine Schutzdrossel für den Kontakt verwendet werden, so erscheint dies zunächst praktisch nicht durchführbar, da die Kontakte eines kleinen Relais mit geringerem Schaltvermögen eine höhere Induktivität zu ihrem Schutz benötigen und eine Erhöhung der Windungszahl der Drossel bei geringerer Baugröße eine starke Zunahme des Wicklungswiderstandes bedeutet. Dies hätte aber eine unzulässig große Erhöhung der Verlustleistung im Querzweig des Schaltzusatzes während einer Streckenunterbrechung zur Folge.

In weiterer Ausgestaltung der Erfindung wird die Schaltungsanordnung derart ausgebildet, daß parallel zur Drossel ein Arbeitskontakt eines über eine zweite Verzögerungsschaltung an den Widerstand angeschlossenen zweiten Hilfsrelais angeordnet ist und daß die Verzögerungsschaltungen derart bemessen sind, daß die Verzögerungszeit der ersten Verzögerungsschaltung größer als die der zweiten Verzögerungsschaltung ist, so daß sämtliche Kontakte der Relais als im Normalbetrieb dauernd geöffnete Einfachkontakte ausgebildet sind.

Wird die Fernspeiseschleife unterbrochen, so fällt das Schaltrelais des vor der Unterbrechungsstelle liegenden Schaltzusatzes ab. Der Fernspeisestrom fließt über den Querzweig und am Widerstand fällt eine entsprechende Spannung ab. Nach Ablauf der Verzögerungszeit der ersten Verzögerungsschaltung wird die Drossel kurzgeschlossen und kann sich abmagnetisieren. Darauf wird die Ansprechwicklung des Schaltrelais nach der Verzögerungszeit der zweiten Verzögerungsschaltung wirksam geschaltet.

Durch diese Maßnahmen ergibt sich in vorteilhafter Weise eine Schaltungsanordnung, die sich auf besonders kleinem Raum unterbringen läßt und dabei sowohl für die betriebsmäßige als auch für die im Unterbrechungsfall verkürzte Fernspeiseschleife einen besonders geringen Spannungsabfall bzw. eine besonders geringe Verlustleistung hervorruft.

Der für die Hilfsrelais und die Bauteile der Verzögerungsschaltungen benötigte Platzbedarf läßt sich durch Verwenden kleiner Bauteile und Relais so gering halten, daß wegen der nun möglichen wesentlichen Verkleinerung der Abmessungen des Schaltrelais und der Schutzdrossel insgesamt ein geringeres Volumen und eine bessere Raumausnutzung erzielbar sind als bei vergleichbaren bekannten Schaltzusätzen.

Es kann sich ferner als zweckmäßig erweisen, die Schaltungsanordnung so auszubilden, daß parallel zu der aus der Haltewicklung und der Ansprechwicklung des Schaltrelais und dem Arbeitskontakt des ersten Hilfsrelais gebildeten Serienschaltung zwei antiparallel geschaltete Diodenzweige vorgesehen sind, von denen der für den Fernspeisestrom in Durchlaßrichtung gepolte eine derartige Zahl von Diodenstrecken enthält, daß beim Nennwert des Fernspeisestromes die Spannung an der Haltewicklung des Schaltrelais durch den Diodenzweig begrenzt wird.

Hierbei ist es vorteilhaft, den Widerstand der Haltewicklung so zu bemessen, daß beim ungestörten Betrieb nur ein zum Halten des Schaltrelais notwendiger Teil des Fernspeisestromes über die Haltewicklung und der andere Teil über die Dioden fließt.

Auf diese Weise wird auch bei ungünstigen Verhältnissen sicher vermieden, daß unmittelbar nach einer Streckenunterbrechung infolge von dynamischen Vorgängen durch das verschieden schnelle Abfallen von benachbarten Schaltzusätzen die Haltespule durch Stromimpulse kurzzeitig so stark erregt wird, daß der Ruhekontakt noch während des hohen Entladestromes über den Querzweig vorübergehend öffnet und dadurch über sein Schaltvermögen beansprucht wird.

Weitere vorteilhafte Ausgestaltungen der Erfindung ergeben sich aus den Patentansprüchen 5 bis 10.

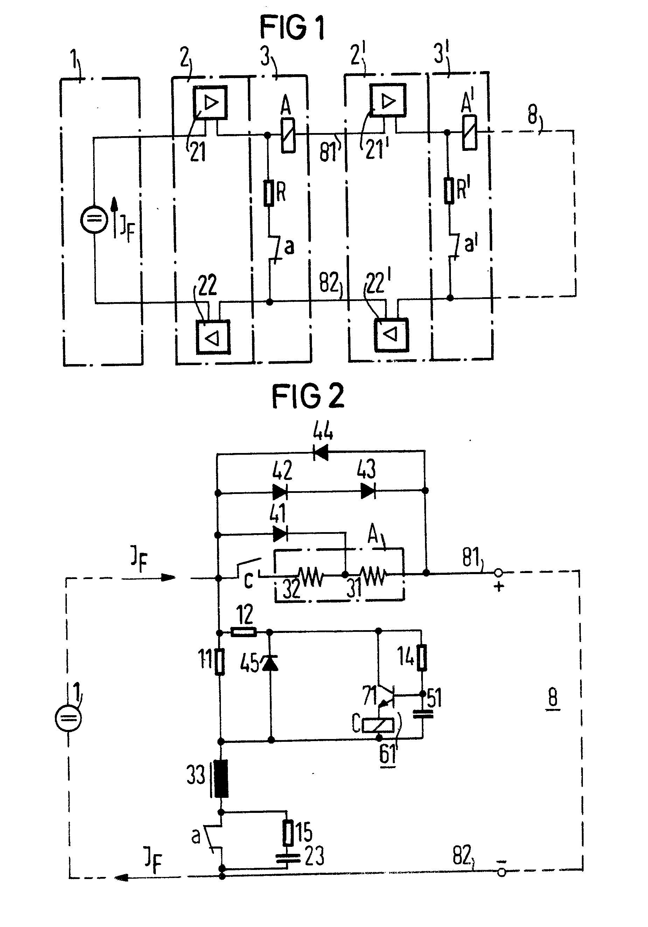

Die Erfindung wird anhand der in Fig. 1 gezeigten bekannten Fernspeiseeinrichtung und des in Fig. 2 gezeigten Ausführungsbeispieles näher erläutert.

Es zeigen

Figur 1 eine bekannte Einrichtung zur Gleichstrom-Reihenspeisung von Zwischenstellen einer Nachrichten-Übertragungseinrichtung,

Figur 2 einen Schaltzusatz für ferngespeiste Zwischenverstärkerstellen mit einem Schaltrelais und zwei Hilfsrelais,

Figur 3 einen Schaltzusatz für beidseitig gespeiste Fernspeisekreise,

Figur 4 einen Schaltzusatz nach Fig. 2 mit zusätzlichen Hilfsrelais und

Figur 5 einen Schaltzusatz nach Fig. 3 mit zusätzlichen Hilfsrelais.

Die in Fig. 1 gezeigte Fernspeiseeinrichtung enthält die Speisestelle 1, die als Konstantstromquelle einen eingeprägten Fernspeisestrom $I_F$ an eine Fernspeiseschleife 8 abgibt. Über die Fernspeiseschleife 8 werden mehrere Zwischenstellen, die Verstärker oder Regeneratoren enthalten, gespeist. Von einer Vielzahl von Zwischenstellen sind in Figur 1 lediglich die Zwischenstellen 2 mit dem Schaltzusatz 3 und die Zwischenstelle 2' mit dem Schaltzusatz 3' dargestellt. Jede Zwischenstelle enthält zwei Verstärker, von denen jeder einer Übertragungsrichtung zugeordnet ist. Beide Verstärker können ggf. für ein und dieselbe Übertragungsrichtung vorgesehen sein. Die Stromversorgungseingänge der Verstärker einer Zwischenstelle liegen jeweils in verschiedenen Strompfaden 81, 82 der Fernspeiseschleife 8.

Der Schaltzusatz 3 bzw. 3' ist jeweils auf der der Speisestelle 1 abgewandten Seite der Verstärker angeordnet. In den einen Fernspeisestrompfad 81 des weiterführenden Teiles der Fernspeiseschleife 8 ist die Erregerwicklung des Schaltrelais A bzw. A' eingefügt, dessen Ruhekontakt a bzw. a' in Serie zu einem Widerstand R bzw. R' in einem Querzweig liegt, der von der Speisestelle 1 gesehen hinter den Verstärkern bzw. Regeneratoren 21, 22 bzw. 21', 22' und vor der Erregerwicklung des Relais A bzw. A' liegt. Der Fernspeisekreis verläuft insbesondere über die Innenleiter der Koaxialkabel einer Vierdraht-Übertragungsstrecke oder in einem Fernspeisekabel, z. B. bei Lichtwellenleiter-Übertragungsstrecken. In diesem Fall sind — was in Fig. 1 nicht näher dargestellt ist — die Verstärker bzw. Regeneratoren mit Fernspeiseweichen versehen, die in der Zwischenstelle Fernspeiseschleife und Signalübertragungswege voneinander trennen und wieder zusammenführen.

Ein Schaltzusatz, der für eine Einrichtung nach Art der in Fig. 1 gezeigten Einrichtung geeignet ist und dabei den Einsatz platzsparender kleiner Relais und Drosseln ermöglicht, ist in Fig. 2 dargestellt.

Bei dem in Fig. 2 gezeigten Ausführungsbeispiel ist das Schaltrelais A das zum Schließen der ersatzweisen Fernspeiseschleife dienende Bauteil. Bei einer Streckenunterbrechung verbindet sein Ruhekontakt a die beiden Fernspeisestrompfade 81, 82 über den Widerstand 11 und die Drossel 33 miteinander.

Die Ansprechwicklung 32 des Relais A läßt sich mit Hilfe eines ersten Hilfsrelais C wirksam schalten, das über eine erste Verzögerungsschaltung 61 an den Widerstand 11 des Querzweiges angeschlossen ist.

Die Verzögerungsschaltung 61 enthält eine RC-Serienschaltung 14, 51 und einen Transistor 71. Das der Verzögerungsschaltung 61 zugeordnete Hilfsrelais C liegt jeweils zwischen dem kondensatorseitigen Anschluß der Serienschaltung 14, 51 und dem Emitter des Transistors 71. Der Transistor 71 ist mit dem Kollektor an den widerstandsseitigen Anschluß der Serienschaltung 14, 51 und mit seiner Basis an den Verbindungspunkt zwischen dem Widerstand 14 und dem Kondensator 51 der Serienschaltung 14, 51 geführt. Zwischen dem Widerstand 11 des Querzweiges und der Verzögerungsschaltung 61 ist eine Schaltung zur Spannungsstabilisierung mit einer über einen Vorwiderstand 12 an den Widerstand 11 des Querzweiges geführten Z-Diode 45 angeschlossen. Der Widerstand 12 dient als Schutz gegen Überstromimpulse für die eine konstante Betriebsspannung für die Verzögerungsschaltungen liefernde Z-Diode 45.

Zum Wirksamschalten der Ansprechwicklung 32 des Schaltrelais A ist in Serie zur Ansprechwicklung 32 ein Arbeitskontakt c des ersten Hilfsrelais C angeordnet. Die Serienschaltung aus dem Arbeitskontakt c und der Ansprechwicklung 32 ist durch eine für den Fernspeisestrom $I_F$ in Durchlaßrichtung gepolte Diode 41 überbrückt. Hierbei ist vorausgesetzt, daß der Spannungsabfall des Ansprechstromes am Widerstand der Ansprechwicklung ausreichend niedriger liegt, als die Schwellwertspannung der Diode 41. Bei einem notwendig höheren Spannungsabfall muß die Diode 41 durch zwei oder entsprechend mehrere Schwellwerte ersetzt werden, damit bei geschlossenem Kontakt c der gesamte Ansprechstom über die Wicklung 32 fließt.

Parallel zu der aus der Haltewicklung 31 und der Ansprechwicklung 32 des Schaltrelais A und dem Arbeitskontakt c des ersten Hilfsrelais C gebildeten Serienschaltung liegen zwei antiparallel geschaltete Diodenzweige 44 und 42, 43. Die Dioden 42, 43 und 44 dienen zum Schutz der Relaiswicklung gegen Überstromimpulse auf der Strecke, die durch Blitzschläge oder durch induzierte Überspannungen im Kabel verursacht werden können.

Der für den Fernspeisestrom $I_F$ in Durchlaßrichtung gepolte Diodenzweig mit den Diodenstrecken 42, 43 enthält eine derartige Zahl von Diodenstrecken, daß beim Nennwert des Fernspeisestromes $I_F$ die Spannung an der Haltewicklung 31 des Schaltrelais A durch den Diodenzweig 42, 43 begrenzt wird. Hierbei ist es vorteilhaft, den Widerstand der Haltewicklung so zu wählen, daß beim ungestörten Betrieb nur ein zum Halten des Relais notwendiger Teil des Fernspeisestromes über die Haltewicklung und der andere Teil über die Dioden fließt. Auf diese Weise wird vermieden, daß unmittelbar nach einer Streckenunterbrechung infolge von dynamischen Vorgängen durch das verschieden schnelle Abfallen von benachbarten Schaltzusätzen die Haltespule durch Stromimpulse kurzzeitig so stark erregt wird, daß der Kontakt noch während des hohen Entladestromes über den Querzweig vorübergehend öffnet und dadurch über sein Schaltvermögen beansprucht wird.

Die Drossel 33 dient als Kontaktschutz beim Schließen des Ruhekontaktes a. Sie übernimmt zunächst die hohe Fernspeisespannung +, −, die zwischen den Speisestrompfaden 81, 82 herrschen kann, und geht erst dann in Sättigung, z. B. nach einigen 100 µs, wenn der Ruhekontakt a sicher geschlossen hat.

Die beim Schaltrelais A vorgenommene Wicklungsumschaltung vermeidet eine Übererregung und stellt ein störungsfreies Zusammenspiel der Schaltzusätze auf der Strecke sicher. Sie erlaubt es, für die Zuschaltung der Ansprechwicklung 32 einen einfachen Arbeitskontakt zu verwenden. Wie Fig. 2 zeigt, wird dabei mittels des Kontaktes c die Ansprechwicklung 32 des Relais A in Reihe zur Haltewicklung 31 geschaltet. Nach Ansprechen des Schaltrelais A wird diese Zuschaltung aufgetrennt; der Fernspeisestrom fließt dann über den Dioden-Bypaß 41 direkt zur Haltewicklung 31.

Mit Hilfe der dem Hilfsrelais C vorgeschalteten Verzögerungsschaltung 61 wird erreicht, daß das Zuschalten der Ansprechwicklung des Schaltrelais A erst dann erfolgen kann, wenn sich die Fernspeisestrecke vollständig entladen hat. Stromimpulse, die während der Entladung der Fernspeisestrecke auftreten können, führen daher nicht zu einem Ansprechen des Schaltrelais A.

Die Reihenschaltung des Widerstandes 15 und des Kondensators 23, die parallel zum Kontakt a liegt, dient als Kontaktschutz beim Schließen des Ruhekontaktes a.

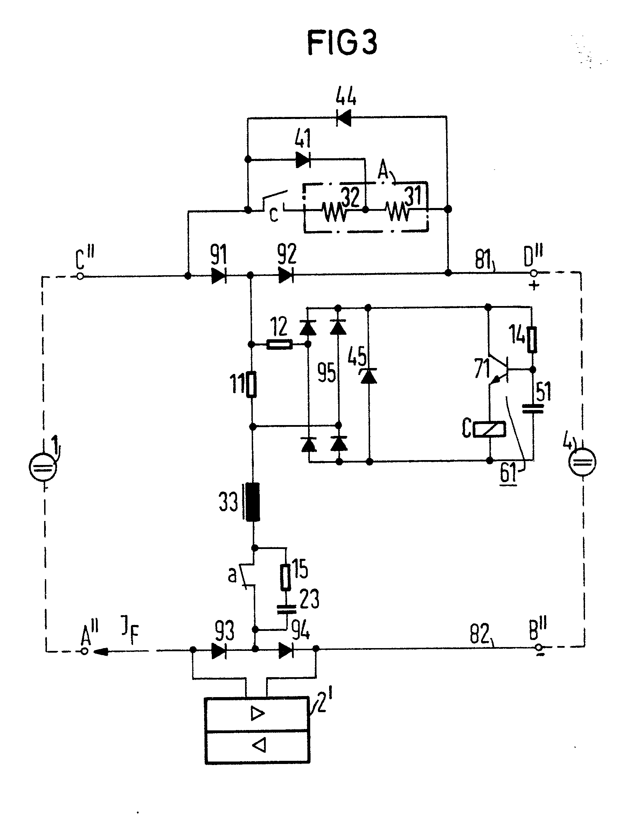

Der in Fig. 3 gezeigte Schaltzusatz ist für Fernspeisekreise geeignet, die mit Hilfe von zwei Konstantstromquellen 1 und 4 beidseitig gespeist werden. Ferner ermöglicht er es, die zu speisenden Verstärker bzw. Regeneratoren von Zwischenstelle zu Zwischenstelle alternierend in den einen und den anderen Fernspeise-Strompfad zu schalten, um eine gleichmäßige Lastverteilung zu erzielen bzw. eine Kompensation der Beeinflussung durch induzierte Wechselströme auf der Strecke zu erreichen.

Der Schaltzusatz wird auf der einen Seite mit den Anschlüssen A″ und C″, auf der anderen Seite mit den Anschlüssen B″ und D″ in den Fernspeisekreis eingeschaltet.

Die Anschlüsse A″ und B″, an die der Verstärker 2′ angeschlossen ist, sind über eine Serienschaltung aus den bezogen auf den Fernspeisestrom in Sperrichtung gepolten Dioden 93 und 94 verbunden. Zwischen den Anschlüssen C″ und D″ liegt eine Parallelschaltung aus der Serienschaltung aus den bezogen auf den Fernspeisestrom in Durchlaßrichtung gepolten Dioden 91 und 92 und der Serienschaltung des Kontakts c und der Wicklungen 32 und 31. Der Widerstand der Wicklung 31 ist vorzugsweise so bemessen, daß im ungestörten Betrieb im Zusammenwirken mit den Dioden 91 und 92 über die Wicklung 31 nicht wesentlich mehr als der zum Halten erforderliche Strom fließt. Zwischen den Verbindungspunkten der beiden Dioden 91, 92 bzw. der Dioden 93 und 94 liegt der Querzweig des Schaltzusatzes.

Abweichend von Fig. 2 ist zwischen dem Widerstand 11 und der Verzögerungsschaltung 61 eine Dioden-Gleichrichterbrücke 95 eingefügt. Dieser Gleichrichterbrücke 95 ist der Widerstand 12 vor- und die Z-Diode 45 nachgeschaltet.

Sind für den Diodenzweig 41 mehrere Diodenstrecken erforderlich, so sind in den Diodenzweigen 91 und 92 entsprechend mehr Schwellwerte vorzusehen.

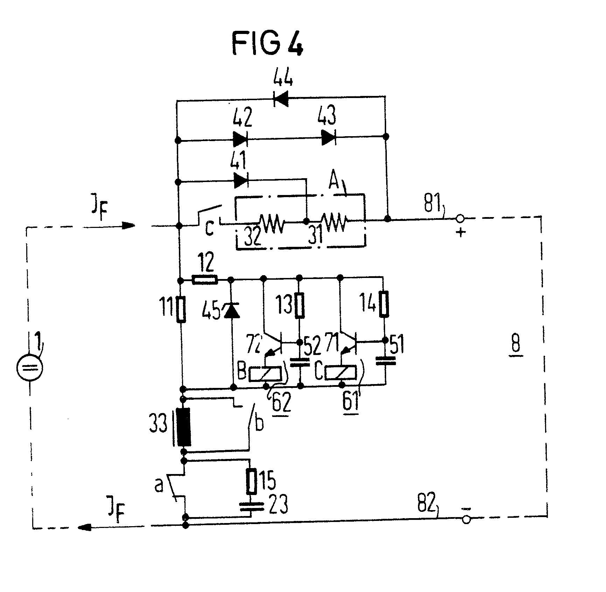

Der in Fig. 4 gezeigte Schaltzusatz stimmt mit dem nach Fig. 2 weitgehend überein. Zusätzlich zum ersten Hilfsrelais C und zur ersten Vorzögerungsschaltung 61 ist ein zweites Hilfsrelais B vorgesehen, das über eine zweite Verzögerungsschaltung 62 an den Widerstand 11 des Querzweiges angeschlossen ist und dessen Arbeitskontakt parallel zur Drossel 33 liegt.

Die Verzögerungsschaltung 62 enthält eine RC-Serienschaltung 13, 52 und einen Transistor 72. Das der Verzögerungsschaltung 62 zugeordnete Hilfsrelais B liegt jeweils zwischen dem kondensatorseitigen Anschluß der Serienschaltung 13, 52 und dem Emitter des Transistors 72. Der Transistor 72 ist mit dem Kollektor an den widerstandsseitigen Anschluß der Serienschaltung 13, 52 und mit seiner Basis an den Verbindungspunkt zwischen dem Widerstand 13 und dem Kondensator 52 der Serienschaltung 13, 52 geführt. Die Verzögerungszeit der ersten Vorzögerungsschaltung 61 ist größer als die der zweiten Verzögerungsschaltung 62.

Zwischen dem Widerstand 11 des Querzweiges und den Verzögerungsschaltungen 61, 62 ist die Schaltung zur Spannungsstabilisierung mit der über den Vorwiderstand 12 an den Widerstand 11 des Querzweiges geführten Z-Diode 45 angeschlossen. Der Widerstand 12 dient als Schutz gegen Überstromimpulse für die eine konstante Betriebsspannung für die Verzögerungsschaltungen liefernde Z-Diode 45.

Die Drossel 33 übernimmt zunächst die hohe Fernspeisespannung +, −, die zwischen den Speisestrompfaden 81, 82 herrschen kann, und geht erst dann in Sättigung, wenn der Ruhekontakt a sicher geschlossen hat.

Nach Ablauf der Streckenentladung über den Querzweig des Schaltzusatzes wird die Drossel 33 über den Kontakt b des entsprechend verzögert angesteuerten Hilfsrelais B kurzgeschlossen. Die Schutzdrossel 33 wird daher erst nach Durchfluß des Streckenentladestromes, also nach Ablauf ihrer Schutzfunktion überbrückt. Damit wird einerseits eine unnötige Verlustleistung an der Drossel 33 durch den nun über den Querzweig fließenden Fernspeisestrom vermieden, andererseits auch die Entmagnetisierung der gesättigten Drossel eingeleitet.

Mit Hilfe der dem Hilfsrelais C vorgeschalteten Verzögerungsschaltung 61 wird erreicht, daß das Wiederansprechen der Schaltrelais A erst dann erfolgt, wenn sich die Schutzdrossel 33 über den Kurzschluß des Kontaktes b abmagnetisiert hat und gleichsam wieder schutzfähig geworden ist. Als Schaltrelais A kann daher ein Relais mit besonders kleiner Schaltleistung Verwendung finden.

Der mit den Hilfsrelais und den Verzögerungsschaltungen verbundene zusätzliche Bauteileaufwand hat in vorteilhafter Weise auf die Ausfallrate des Schaltzusatzes praktisch keinen Einfluß, da während des ungestörten Betriebes der Übertragungsstrecke alle diese Bauteile strom- und spannungslos sind und auch sämtliche Kontakte als dauernd geöffnete Einfachkontakte ausgeführt sind. Ausfälle bei den insbesondere für die Verzögerungsschaltungen erforderlichen zusätzlichen Bauteile können somit keine Betriebsstörungen bei der Nachrichtenübertragung zur Folge haben.

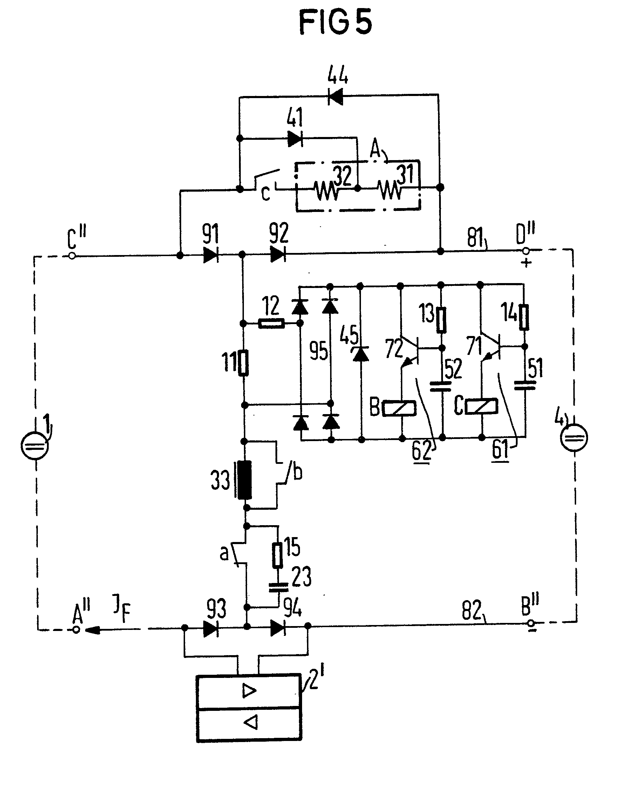

Der in Fig. 5 gezeigte Schaltzusatz stimmt mit dem nach Fig. 3 weitgehend überein.

Abweichend von Fig. 2 ist zwischen dem Widerstand 11 und den Verzögerungsschaltungen 61 und 62 eine Dioden-Gleichrichterbrücke 95 eingefügt. Dieser Gleichrichterbrücke 95 ist der Widerstand 12 vor- und die Z-Diode 45 nachgeschaltet.

Bei dem in Fig. 5 gezeigten Schaltzusatz erweist sich der Kontakt b als besonders vorteilhaft, da er die Entmagnetisierung der Drossel 33 für beide Stromrichtungen gewährleistet.

Die Schaltungsanordnung kann vorteilhaft auch in Speisestellen Verwendung finden, um im Falle einer Unterbrechung in den abgehenden Fernspeisestrompfaden die Ausgangsspannung auf einen ungefährlichen Wert herabzusetzen.

## Patentansprüche

1. Schaltungsanordnung zum selbsttätigen Schließen einer unterbrochenen Fernspeiseschleife vor der Unterbrechungsstelle in der betriebsmäßig vorgesehenen Fernspeiseschleife einer Fernspeiseeinrichtung, die elektrische Verbraucher mittels Gleichstrom-Reihenspeisung speist, wobei in einem Längszweig eine Haltewicklung (31) eines Schaltrelais (A) und eine bei nicht erregtem Schaltrelais (A) wirksam und bei Erregung des Schaltrelais (A) unwirksam schaltbare Ansprechwicklung (32) und in einem Querzweig eine einen Ruhekontakt (a) des Schaltrelais (A), eine Drossel (33) und einen Widerstand (11) enthaltende Serienschaltung angeordnet ist und das Relais (A) durch den in der betriebsmäßig vorgesehenen Fernspeiseschleife fließenden Strom bei einem vorgegebenen Bruchteil vom Nennwert des Fernspeisestromes ($I_F$) erregt wird und bei darauffolgendem Absinken des Fernspeisestromes ($I_F$) unter einen vorgegebenen Wert abfällt, dadurch gekennzeichnet, daß die Ansprechwicklung (32) des Schaltrelais (A) mittels eines ersten, über eine erste Verzögerungsschaltung (61) an den Widerstand (11) angeschlossenen Hilfsrelais (C) wirksam schaltbar ist und daß in Serie zur Ansprechwicklung (32) ein Arbeitskontakt (c) des ersten Hilfsrelais (C) angeordnet ist und daß die Serienschaltung aus dem Arbeitskontakt (c) und der Ansprechwicklung (32) durch eine für den Fernspeisestrom ($I_F$) in Durchlaßrichtung gepolte Diode (41) überbrückt ist.

2. Schaltungsanordnung nach Anspruch 1, dadurch gekennzeichnet, daß parallel zur Drossel (33) ein Arbeitskontakt (b) eines über eine zweite Verzögerungsschaltung (62) an den Widerstand (11) angeschlossenen zweiten Hilfsrelais (B) angeordnet ist und daß die Verzögerungsschaltungen (61, 62) derart bemessen sind, daß die Verzögerungszeit der ersten Verzögerungsschaltung (61) größer als die der zweiten Verzögerungsschaltung (62) ist.

3. Schaltungsanordnung nach Anspruch 1 oder 2, dadurch gekennzeichnet, daß die Hilfsrelais (B, C) als Relais mit Dual-in-line-Gehäuse ausgebildet sind.

4. Schaltungsanordnung nach einem der Ansprüche 1 bis 3, dadurch gekennzeichnet, daß parallel zu der aus der Haltewicklung (31) und der Ansprechwicklung (32) des Schaltrelais (A) und dem Arbeitskontakt (c) des ersten Hilfsrelais (C) gebildeten Serienschaltung zwei antiparallel geschaltete Diodenzweige (44 ; 42, 43) vorgesehen sind, von denen der für den Fernspeisestrom ($I_F$) in Durchlaßrichtung gepolte eine derartige Zahl von Diodenstrecken (42, 43) enthält, daß beim Nennwert des Fernspeisestromes ($I_F$) die Spannung an der Haltewicklung (31) des Schaltrelais (A) durch den Diodenzweig (42, 43) begrenzt wird.

5. Schaltungsanordnung nach einem der Ansprüche 1 bis 4, dadurch gekennzeichnet, daß wenigstens eine der Verzögerungsschaltungen (61, 62) eine RC-Serienschaltung (14, 51 ; 13, 52) und einen Transistor (71, 72) enthält, und daß das der Verzögerungsschaltung (61, 62) zugeordnete Hilfsrelais (C, B) zwischen dem kondensatorseitigen Anschluß der Serienschaltung (14, 51 ; 13, 52) und dem Emitter des Transistors (71, 72) liegt und daß der Transistor (71, 72) mit dem Kollektor an den widerstandsseitigen Anschluß der Serienschaltung (14, 51 ; 13, 52) und mit seiner Basis an den Verbindungspunkt zwischen dem Widerstand (14, 13) und dem Kondensator (51, 52) der Serienschaltung (14, 51 ; 13, 52) geführt ist.

6. Schaltungsanordnung nach einem der Ansprüche 1 bis 5, dadurch gekennzeichnet, daß zwischen dem Widerstand (11) des Querzweiges und den Verzögerungsschaltungen (61, 62) eine Schaltung zur Spannungsstabilisierung, insbesondere eine über einen Vorwiderstand (12) an den Widerstand (11) des Querzweiges angeschlossene Z-Diode (45) angeschlossen ist.

7. Schaltungsanordnung nach einem der Ansprüche 1 bis 6, dadurch gekennzeichnet, daß die Drossel (33) derart bemessen ist, daß sie in Sättigung geht, nachdem der im Querzweig liegende Ruhekontakt (a) des Schaltrelais (A) sicher geschlossen hat.

8. Schaltungsanordnung nach einem der Ansprüche 1 bis 7, dadurch gekennzeichnet, daß die zweite Verzögerungsschaltung (62) derart bemessen ist, daß das daran angeschlossene Relais (B) nach Ablauf der über den Querzweig erfolgenden Entladung der zwischen den Fernspeisestrompfaden (81, 82) wirksamen Kapazitäten erregt wird.

9. Schaltungsanordnung nach einem der Ansprüche 1 bis 8, dadurch gekennzeichnet, daß die erste Verzögerungsschaltung (61) derart bemessen ist, daß das daran angeschlossene Hilfsrelais (C) erst nach der Abmagnetisierung der Drossel (33) erregt wird.

10. Schaltungsanordnung nach einem der vorhergehenden Ansprüche, dadurch gekennzeichnet, daß die Schaltungsanordnung für beide Stromrichtungen im Querzweig ausgebildet ist und daß die Verzögerungsschaltungen (61, 62) über eine Gleichrichter-Brückenschaltung (95) an den Querzweig angeschlossen sind.

## Claims

1. A circuit arrangement for automatically closing an interrupted remote feed loop at a point prior to the interruption position in a remote feed loop provided for the operation of a remotely fed device, which loop feeds electrical loads in a series d. c. mode, wherein a series arm contains a holding winding (31) of a switching relay (A) and a response winding (32) which can be actuated when the switching relay (A) is not energised and which can be deactuated when the switching relay (A) is energised, and the shunt arm contains a series arrangement consisting of a rest contact (a) of the switching relay (A), a choke (33) and a resistor (11), and the relay (A) is energised by the current flowing in the remote feed loop provided for operation at a predetermined fraction of the nominal value of the remote feed current ($I_F$), and then drops to a predetermined value when the remote feed current ($I_F$) subsequently falls, characterised in that the response winding (32) of the switching relay (A) can be activated by means of a first auxiliary relay (C) connected to the resistor (11) via a first delay circuit (61), and that a make contact (c) of the first auxiliary relay (C) is arranged in series with the response winding (32), and that the series arrangement consisting of the make contact (c) and the response winding (32) is bridged by a diode (41) poled in the forwards direction for the remote feed current ($I_F$).

2. A circuit arrangement as claimed in Claim 1, characterised in that a make contact (b) of a second auxiliary relay (B), connected to the resistor (11) via a second delay circuit (62), is arranged in parallel to the choke (33), and that the delay circuits (61, 62) are contrived to be such that the delay time of the first delay circuit (61) is greater than that of the second delay circuit (62).

3. A circuit arrangement as claimed in Claim 1 or 2, characterised in that the auxiliary relays (B, C) are designed as relays having a dual-in-line housing.

4. A circuit arrangement as claimed in one of Claims 1 to 3, characterised in that parallel to the series arrangement consisting of the holding winding (31), the response winding (32) of the switching relay (A) and the make contact (c) of the first auxiliary relay (C) there are arranged two diode arms (44 ; 42, 43) connected in anti-parallel fashion, of which the first is poled in the forwards direction for the remote feed current ($I_F$) and contains a number of diode paths (42, 43) such that at the nominal value of the remote feed current ($I_F$) the voltage connected to the holding winding (31) of the switching relay (A) is limited by the diode arm (42, 43).

5. A circuit arrangement as claimed in one of Claims 1 to 4, characterised in that at least one of the delay circuits (61, 62) contains an RC-series arrangement (14, 51 ; 13, 52) and a transistor (71, 72), and that the auxiliary relay (C, B) assigned to the delay circuit (61, 62) is located between the capacitor-end terminal of the series arrangement (14, 51 ; 13, 52) and the emitter of the transistor (71, 72), and the transistor (71, 72) has its collector connected to the resistor-end terminal of the series arrangement (14, 51 ; 13, 52) and its base to the connection point between the resistor (14, 13) and the capacitor (51, 52) of the series arrangement (14, 51 ; 13, 52).

6. A circuit arrangement as claimed in one of Claims 1 to 5, characterised in that there is arranged between the resistor (11) of the shunt arm and the delay circuits (61, 62) a voltage stabilising circuit, in particular a Z-diode (45), connected via a series resistor (12) to the resistor (11) of the shunt arm.

7. A circuit arrangement as claimed in one of Claims 1 to 6, characterised in that the choke (33) is contrived to be such that it enters saturation when the rest contact (a), located in the shunt arm of the switching relay (A) has safely closed.

8. A circuit arrangement as claimed in one of Claims 1 to 7, characterised in that the second delay circuit (62) is such that the relay (B) connected thereto is excited at the end of the discharge via the shunt arm of the capacitors which are active between the remote feed current paths (81, 82).

9. A circuit arrangement as claimed in one of Claims 1 to 8, characterised in that the first delay circuit (61) is contrived to be such that the auxiliary relay (C) connected thereto is energised only following the demagnetisation of the choke (33).

10. A circuit arrangement as claimed in one of the preceding Claims, characterised in that the circuit arrangement for the two current directions is located in the shunt arm, and that the delay circuits (61, 62) are connected to the shunt arm via a rectifier bridge circuit (95).

**Revendications**

1. Montage pour la fermeture automatique d'une boucle interrompue d'alimentation à distance, en amont du point d'interruption présent dans la boucle d'alimentation à distance, prévue lors du fonctionnement, d'un dispositif d'alimentation à distance, et qui alimente des appareils d'utilisation électriques en leur délivrant une alimentation série en courant continu, auquel cas un enroulement de maintien (31) d'un relais de commutation (A) et un enroulement de réponse (32) pouvant être commuté à l'état actif dans le cas où le relais de commutation (A) n'est pas excité et pouvant être commuté à l'état inactif lors de l'excitation du relais de commutation (A) sont disposés dans une branche longitudinale, et un circuit série contenant un contact de repos (a) du relais de commande (A), une bobine d'arrêt (33) et une résistance (11) est disposé dans une branche transversale, et le relais (A) est excité par le courant circulant dans la boucle d'alimentation à distance, prévue lors du fonctionnement, pour une fraction prédéterminée de la valeur nominale du courant d'alimentation à distance ($I_F$) et retombe lors de la diminution ultérieure du courant d'alimentation à distance ($I_F$), tombant au-dessous d'une valeur prédéterminée, caractérisé par le fait que l'enroulement de réponse (32) du relais de commutation (A) peut être commuté à l'état actif au moyen d'un premier relais auxiliaire (C) raccordé par l'intermédiaire d'un premier circuit de retardement (61) à la résistance (11), et qu'un contact de travail (c) du premier relais auxiliaire (c) est disposé en série avec l'enroulement de réponse (32), et que le circuit série formé par le contact de travail (c) et l'enroulement de réponse (32) est shunté par une diode (41) polarisée dans le sens direct pour le courant d'alimentation à distance ($I_F$).

2. Montage suivant la revendication 1, caractérisé par le fait qu'un contact de travail (b) d'un second relais auxiliaire (B), raccordé par l'intermédiaire d'un second circuit de retardement (62) à la résistance (11), est monté en parallèle avec la bobine d'arrêt (33) et que les circuits de retardement (61, 62) sont dimensionnés de telle sorte que le retard produit par le premier circuit de retardement (61) est supérieur au retard produit par le second circuit de retardement (62).

3. Montage suivant la revendication 1 ou 2, caractérisé par le fait que les relais auxiliaires (B, C) sont réalisés sous la forme de relais comportant un boîtier à double ligne de connexions.

4. Montage suivant l'une des revendications 1 à 3, caractérisé par le fait qu'il est prévu, en parallèle avec le circuit série formé par l'enroulement de maintien (31) et l'enroulement de réponse (32) du relais de commutation (A) et le contact de travail (c) du premier relais auxiliaire (C), deux branches à diodes (44 ; 42, 43) branchées selon un montage antiparallèle et dont la branche polarisée dans le sens direct pour le courant d'alimentation à distance ($I_F$) contient un nombre tel d'éléments formant diodes (42, 43) que, pour la valeur nominale du courant d'alimentation à distance ($I_F$), la tension aux bornes de l'enroulement de maintien (31) du relais de commutation (A) est limitée par la branche à diodes (42, 43).

5. Montage suivant l'une des revendications 1 à 4, caractérisé par le fait qu'au moins l'un des circuits de retardement (61, 62) contient un circuit série RC (14, 51 ; 13, 52) et un transistor (71, 72), et que le relais auxiliaire (C, B) associé au circuit de retardement (61, 62) est branché entre la borne, située du côté du condensateur, du circuit série (14, 51 ; 13, 52) et l'émetteur du transistor (62, 72), et que le transistor (71, 72) est relié à la borne, située du côté de la résistance, du circuit série (14, 51 ; 13, 52) et, par sa base, au point de liaison entre la résistance (14, 13) et le condensateur (51, 52) du circuit série (14, 51 ; 13, 52).

6. Montage suivant l'une des revendications 1 à 5, caractérisé par le fait qu'entre la résistance (11) de la branche transversale et les circuits de retardement (61, 62) se trouve branché un circuit servant à stabiliser la tension, en particulier une diode Zener (45) raccordée par l'intermédiaire d'une résistance additionnelle (12) à la résistance (11) de la branche transversale.

7. Montage suivant l'une des revendications 1 à 6, caractérisé par le fait que la bobine d'arrêt (33) est dimensionnée de telle sorte qu'elle est amenée à saturation une fois que le contact de repos (a), situé dans la branche transversale, du relais de commutation (A) est fermé de façon sûre.

8. Montage suivant l'une des revendications 1 à 7, caractérisé par le fait que le second circuit de retardement (62) est dimensionné de telle sorte que le relais (B), qui y est raccordé, est excité après le déroulement de la décharge, s'effectuant par l'intermédiaire de la branche transversale, des capacités actives entre les voies (81, 82) du courant d'alimentation à distance.

9. Montage suivant l'une des revendications 1 à 8, caractérisé par le fait que le premier circuit de retardement (61) est dimensionné de telle sorte que le relais auxiliaire (C), qui y est raccordé, est excité seulement après la désaimantation de la bobine d'arrêt (33).

10. Montage suivant l'une des revendications précédentes, caractérisé par le fait que le montage est agencé pour les deux sens du courant dans la branche transversale et que les circuits de retardement (61, 62) sont raccordés à la branche transversale par l'intermédiaire d'un circuit en pont de redresseurs (95).

0 090 402

# FIG 1

# FIG 2

# FIG 3

FIG 4

# FIG 5